## Europäisches Patentamt
## European Patent Office
## Office européen des brevets

(11) Veröffentlichungsnummer: **0 011 838**
**B1**

(12) **EUROPÄISCHE PATENTSCHRIFT**

(45) Veröffentlichungstag der Patentschrift: **15.12.82**

(51) Int. Cl.³: **B 29 F 1/06**

(21) Anmeldenummer: **79104679.0**

(22) Anmeldetag: **26.11.79**

(54) Formschliessvorrichtung für eine Spritzgiessmaschine.

(30) Priorität: **05.12.78 DE 2852516**

(43) Veröffentlichungstag der Anmeldung:
**11.06.80 Patentblatt 80/12**

(45) Bekanntmachung des Hinweises auf die Patenterteilung:
**15.12.82 Patentblatt 82/50**

(84) Benannte Vertragsstaaten:
**AT BE CH FR GB IT LU NL SE**

(56) Entgegenhaltungen:
**DE - A - 2 146 515**
**DE - B - 1 296 522**
**FR - A - 2 258 949**
**GB - A - 1 121 858**

(73) Patentinhaber: **Krauss-Maffei Aktiengesellschaft**
**Krauss-Maffei-Strasse 2**
**D-8000 München 50 (DE)**

(72) Erfinder: **Wohlrab, Walter**
**Birkenweg 9**
**D-8832 Weissenburg (DE)**

Courier Press, Leamington Spa, England.

Formschließvorrichtung für eine Spritzgießmaschine

Die Erfindung bezieht sich auf eine Formschließvorrichtung für eine Spritzgießmaschine mit einer hydraulisch verschiebbaren Formträgerplatte, deren hydraulische Antriebsvorrichtung einen doppelt wirkenden Hauptkolben, einen vom Hauptkolben in einen öffnungsseitigen und einen schließseitigen Hauptzylinderraum unterteilten Hauptzylinderraum sowie eine, mit dem Hauptkolben in Wirkverbindung stehend Eilgangvorrichtung umfaßt und bei der der öffnungsseitige und der schließseitige Hauptzylinderraum durch einen im Hauptkolben gelegenen, verschließbaren Durchgangskanal miteinander verbunden sind.

Eine Formschließvorrichtung dieser Art ist aus der DE - A - 1 778 952 bekannt, bei der die vor und hinter dem Hauptkolben gelegenen Zylinderräume durch einen Kanal miteinander verbunden sind. Diese Anordnung hat zwar den Vorteil, daß die zu den beiden Wirkflächen des Kolbens hin- und herzubewegenden Umlaufmengen an Druckmedium gering gehalten werden können, sie hat jedoch den Nachteil, daß für das Umlaufventil, das zum Verschließen des Kanals während der Druckphase dient, eine gesonderte Steuereinrichtung benötigt wird. Darüberhinaus erfordert der Hauptkolben eine dem vorhandenen Systemdruck entsprechende Dimensionierung seiner Wirkfläche, was verhältnismäßig große Abmessungen des Hauptkolbens ergibt.

Der Erfindung liegt die Aufgabe zugrunde, eine Formschließvorrichtung der genannten Art zu schaffen, die eine kompakte Bauweise ergibt und die zur Steuerung und Beaufschlagung des Hauptkolbens lediglich Druckmedium mit Systemdruck erfordert.

Diese Aufgabe wird gemäß der Erfindung dadurch gelöst, daß der Hauptkolben einen vorzugsweise koaxialen Zylinderraum aufweist, in dem ein Druckübersetzerkolben axial verschiebbar geführt ist, der den Zylinderraum in einen öffnungsseitigen Teilraum und in einen schließseitigen Teilraum aufteilt, daß der Durchgangskanal so ausgebildet ist, daß der schließseitige Teilraum eine Verbindungsöffnung zum öffnungsseitigen Hauptzylinderraum und eine durch axiale Verschiebung des Druckübersetzerkolbens verschließbare Umlauföffnung zum schließseitigen Hauptzylinderraum besitzt, daß der Druckübersetzerkolben zur Erzeugung eines erhöhten Drucks zwei entgegengesetztgerichtete Kolbenflächen unterschiedlicher Größe aufweist von denen die größere Kolbenfläche dem öffnungsseitigen Teilraum und die kleinere Kolbenfläche dem schließseitigen Teilraum zugewandt ist, wobei sich die kleinere Kolbenfläche erst nach Verschließen der Umlauföffnung durch einen aus der kleineren Kolbenfläche herausragenden, mit dem Druckübersetzerkolben fest verbundenen Verschlußkolben ergibt, und daß der öffnungsseitige Teilraum und der öffnungsseitige Hauptzylinderraum über Anschlußleitungen an eine gemeinsame Druckleitung angeschlossen sind.

Ein Druckübersetzerkolben ist aus der DE—B—1 296 522 au sich bekannt.

Darüberhinaus ergibt die Erfindung den weiteren Vorteil, daß die Druckübersetzungseinrichtung und das Umlaufventil zu einer Funktionseinheit zusammengefaßt sind. Ferner sind sämtliche Steuergeräte nur auf den Systemdruck zu dimensionieren.

In einer bevorzugten Ausführungsform kann die Eilgangvorrichtung aus einem in einem Eilgang-Zylinderraum gelegenen hydraulisch betätigbaren Eilgangkolben bestehen, der mit dem doppelt wirkenden Hauptkolben auf einer Achse liegend angeordnet ist, wobei der Hauptkolben und der Eilgangkolben eine Einheit bilden können, was eine besonders kompakte hydraulische Antriebseinrichtung für die Formträgerplatte ergibt.

Der Druckübersetzerkolben kann zu seiner Verschiebung in eine den Durchgangskanal verschließende Stellung mit einem gesonderten Stellglied versehen sein, das aus einem axial verschieblichen Stellkolben bestehen kann, der in einem an den öffnungsseitigen Teilraum angrenzenden Stell-Zylinder mit Anschluß an die Druckleitung angeordnet sein und ein den Druckübersetzer kolben beaufschlagendes Verlängerungsteil aufweisen kann.

Vorzugsweise weist der zum öffnungsseitigen Hauptzylinderraum führende Anschluß an die Druckleitung ein Zeitverzögerungsglied auf, wodurch man eine exakte zeitliche Trennung der vom Druckübersetzerkolben auszuführenden Funktionen, nämlich des Verschließens der Durchgangsöffnung mit anschließendem Aufbau eines erhöhten Drucks, erzielen kann.

Weitere Einzelheiten und Vorteile der Erfindung ergeben sich aus der nachfolgenden Beschreibung anhand der Zeichnung.

Es zeigen:

Fig. 1 eine Schnittansicht durch eine hydraulische Antriebsvorrichtung für eine Formträgerplatte

Fig. 2 eine Teilansicht einer anderen Ausführungsform der Erfindung

Fig. 3 eine Teilansicht durch eine weitere Ausführungsform.

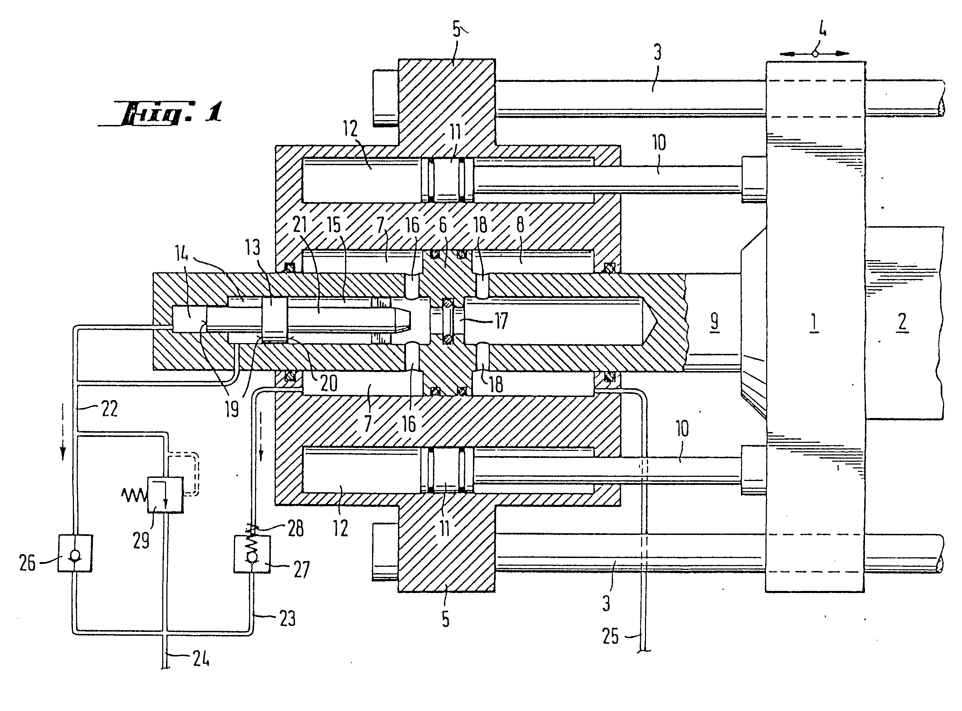

In der Ausführungsform nach Fig. 1 ist eine Formträgerplatte mit 1 bezeichnet, an der eine teilweise dargestellte Formhälfte 2 befestigt ist. Die Formträgerplatte 1 ist auf Führungssäulen 3 in Pfeilrichtung 4 in Formschließ- und -öffnungsrichtung hin- und herbewegbar geführt. Die Führungssäulen 3 sind starr mit einer feststehenden Ständerplatte 5 verbunden, in der die Hydraulikelemente zum Antrieb der Formträgerplatte 1 enthalten sind.

Die Hydraulikelemente bestehen im wesentlichen aus einem Hauptkolben 6, der einen Hauptzylinderraum in einen öffnungsseitigen Hauptzylinderraum 7 und in einen schließseitigen Hauptzylinderraum 8 unterteilt. Der Hauptkolben 6 ist in eine Drucksäule 9 verlängert, die an der Formträgerplatte 1 befestigt ist.

Ebenfalls an der Formträgerplatte 1 greifen Kolbenstangen 10 von Eilgangkolben 11 an, die in ebenfalls in der Ständerplatte 5 angeordneten Eilgangzylinderräumen 12 angeordnet sind.

Der Hauptkolben 6 weist einen koaxialen Zylinderraum auf, in dem ein Druckübersetzerkolben (oder Multiplikator) 13 axial verschieblich geführt ist und der den Zylinderraum in einen öffnungsseitigen Teilraum 14 und in einen schließseitigen Teilraum 15 aufteilt.

Der öffnungsseitige Hauptzylinderraum 7 und der schließseitige Hauptzylinderraum 8 sind durch einen im Hauptkolben 6 angeordneten Durchgangskanal verbunden, der sich durch eine Verbindungsöffnung 16, den schließseitigen Teilraum 15, eine Umlauföffnung 17 und eine weitere, in den schließseitigen Hauptzylinderraum 8 führende Verbindungsöffnung 18 ergibt.

Der Druckübersetzerkolben 13 weist zwei entgegengesetzt gerichtete Kolbenflächen unterschiedlicher Größe auf, von denen die größere Kolbenfläche 19 den öffnungsseitigen Teilraum 14 und die kleinere Kolbenfläche 20 den schließseitigen Teilraum 15 abschließt. Aus der kleineren Kolbenfläche 20 ragt ein mit dem Druckübersetzerkolben 13 eine Einheit bildender Verschlußkolben 21, dessen Querschnittsfläche der Querschnittsfläche der Umlauföffnung 17 entspricht.

Der öffnungsseitige Teilraum 14 und der öffnungsseitige Hauptzylinderraum 7 sind über Anschlußleitungen 22 und 23 an eine gemeinsame, Druckmittel unter Systemdruck führende Druckleitung 24 angeschlossen. Zum schließseitigen Hauptzylinderraum 8 führt eine für den Losreißhub beaufschlagbare Druckleitung 25. Die Anschlußleitungen 22 und 23 besitzen in Rückführrichtung des Druckmittels (Pfeile mit unterbrochenen Linien) sperrende Rückschlagventile 26 und 27, von denen das letztere ein Zeitverzögerungsglied in Form einer Rückschlagventil 27 in Förderrichtung hemmenden Feder 28 besitzt. In Bypass-Anordnung zum Rückschlagventil 26 ist ein Druckschaltventil 29 zur Entlastung des Druckübersetzerkolbens 13 für den Formöffnungsvorgang angeordnet.

In der Ausführungsform nach Fig. 2 bilden der Eilgangkolben 11 und der Hauptkolben 6 eine Einheit und wirken über die Drucksäule 9 gemeinsam auf die Formträgerplatte 1.

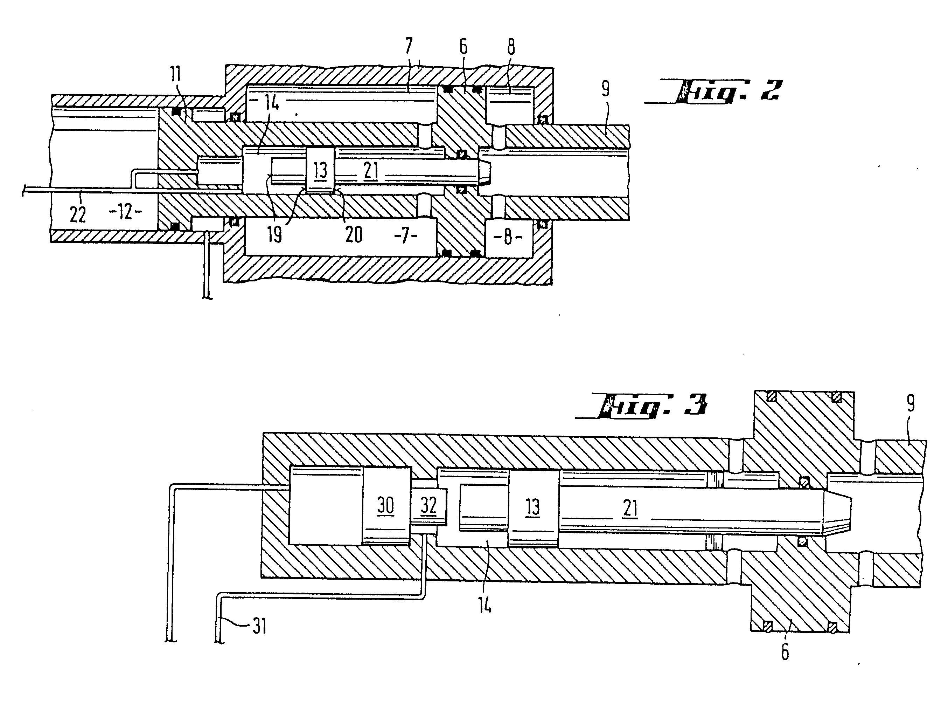

In Fig. 3 ist ein im Hauptkolben 6 angeordneter Druckübersetzerkolben 13 dargestellt, dem ein Stellkolben 30 vorgeschaltet ist. Dieser ist in seinem an den öffnungsseitigen Teilraum 14 angrenzenden Zylinderraum axial verschieblich gelagert, in den ein Anschluß 31 von der Druckleitung 24 führt. Vom Stellkolben 30 ragt ein Verlängerungsteil 32 soweit in den öffnungsseitigen Teilraum 14, daß es am Druckübersetzerkolben 13 anstößt und diesen in eine die Umlauföffnung 17 verschließende Stellung bringen kann.

Im Betrieb der Ausführungsform nach Fig. 1 wird nach Abschluß des Eilgangsvorschubs durch die Eilgangkolben 11 die Druckleitung 24 mit unter Systemdruck stehendem Druckmittel beaufschlagt. Es gelangt über die Anschlußleitungen 22 und 23 in den öffnungsseitigen Teilraum 14 sowie in den öffnungsseitigen Hauptzylinderraum 7 und über die Verbindungsöffnung 16 in den schließseitigen Teilraum 15. Auf Grund der Tatsache, daß der öffnungsseitige Teilraum 14 ein geringeres Volumen aufweist als der öffnungsseitige Hauptzylinderraum 7 und der schließseitige Teilraum 15, kommt das Druckmedium im öffnungsseitigen Teilraum 14 eher zur Wirkung, so daß zunächst der Druckübersetzerkolben 13 verschoben wird und mit seinem Verschlußkolben 21 die Umlauföffnung 17 verschließt. Dabei kann der funktionelle Ablauf, daß vor der Bewegung des Hauptkolbens 6 zuerst der Druckübersetzerkolben 13 bewegt wird, durch Anordnung eines Zeitverzögerungsgliedes in der Anschlußleitung 23 bzw. im Rückschlagventil 27 noch verbessert werden. Es kommt nun das Druckmedium am Hauptkolben 6 zum Tragen, wodurch über die Drucksäule 9 die zum Schließen und Halten erforderliche Kraft auf die Formträgerplatte 1 gebracht wird. Diese Kraft wird noch durch den Druckübersetzerkolben 13 erhöht, da hierdurch noch dessen Differenzdruckflächen zur Wirkung kommen. Bei unveränderter Beaufschlagung mit unter Systemdruck stehendem Druckmittel wird somit noch eine Druckerhöhung im Verhältnis der größeren Kolbenfläche 19 zur kleineren Kolbenfläche 20 des Druckübersetzerkolbens 13 erzielt. Dabei wird ein Rückströmen des Druckmittels durch die Rückschlagventile 26 und 27 verhindert. Nach Abschluß des Spritzgießvorgangs wird der öffnungsseitige Teilraum 14, der schließseitige Teilraum 15 sowie der öffnungsseitige Hauptzylinderraum 7 durch Öffnen des Druckschaltventils 29 entlastet, wonach über einen Druckaufbau über die Druckleitung 25 der Losreißhub eingeleitet wird. Daran anschließend wird die Formträgerplatte 1 durch die Eilgangkolben 11 wieder in die Ausgangsstellung bzw. Öffnungsstellung gefahren.

Im Betrieb der Ausführungsform nach Fig. 3 wird der Druckübersetzerkolben 13 beim Schließvorgang zunächst vom Stellkolben 30 mechanisch in eine die Umlauföffnung 17 verschließende Stellung geschoben, worauf sich der vom Druckübersetzerkolben 13 bewirkte überhöhte Druck zum Schließen und Halten der Spritzgußform-Hälften einstellt. Dabei kann es vorteilhaft sein, sowohl den zum öffnungsseitigen Teilraum 14 als auch den zum öffnungsseitigen Hauptzylinderraum 7 führenden Anschluß mit einem Zeitverzögerungsglied auszustatten.

**Patentansprüche**

1. Formschließvorrichtung für eine Spritzgießmaschine mit einer hydraulisch verschiebbaren Formträgerplatte (1), deren hydraulische Antriebsvorrichtung einen doppelt wirkenden Hauptkolben (6), einen vom Hauptkolben in einen öffnungsseitigen und einen schließseitigen Hauptzylinderraum (7 bzw. 8) unterteilten Hauptzylinderraum sowie eine, mit dem Hauptkolben in Wirkverbindung stehende Eilgangvorrichtung umfaßt und bei der der öffnungsseitige und der schließseitige Hauptzylinderraum durch einen im Hauptkolben gelegenen, verschließbaren Durchgangskanal miteinander verbunden sind, dadurch gekennzeichnet, daß der Hauptkolben (6) einen vorzugsweise koaxialen Zylinderraum aufweist, in dem ein Druckübersetzerkolben (13) axial verschiebbar geführt ist, der den Zylinderraum in einen öffnungsseitigen Teilraum (14) und in einen schließseitigen Teilraum (15) aufteilt, daß der Durchgangskanal so ausgebildet ist, daß der schließseitige Teilraum (15) eine Verbindungsöffnung (16) zum öffnungsseitigen Hauptzylinderraum (7) und eine durch axiale Verschiebung des Druckübersetzerkolbens (13) verschließbare Umlauföffnung (17) zum schließseitigen Hauptzylinderraum (8) besitzt, daß der Druckübersetzerkolben (13) zur Erzeugung eines erhöhten Druckes zwei entgegengesetzt gerichtete Kolbenflächen unterschiedlicher Größe aufweist von denen die größere Kolbenfläche (19) dem öffnungsseitigen Teilraum (14) und die kleinere Kolbenfläche (20) dem schließseitigen Teilraum (15) zugewandt ist, wobei sich die kleinere Kolbenfläche (20) erst nach Verschließen der Umlauföffnung (17) durch einen aus der kleineren Kolbenfläche (20) herausragenden, mit dem Druckübersetzerkolben fest verbundenen Verschlußkolben (21) ergibt, und daß der öffnungsseitige Teilraum (14) und der öffnungsseitige Hauptzylinderraum (7) über Anschlußleitungen (22) bzw. (23) an eine gemeinsame Druckleitung (24) angeschlossen sind.

2. Vorrichtung nach Anspruch 1, dadurch gekennzeichnet, daß die Eilgangvorrichtung aus einem in einem Eilgang-Zylinderraum (12) gelegenen hydraulisch betätigbaren Eilgangkolben (11) besteht und mit dem doppelt wirkenden Hauptkolben (6) auf einer Achse liegend angeordnet ist.

3. Vorrichtung nach Anspruch 2, dadurch gekennzeichnet, daß der doppelt wirkende Hauptkolben (6) und der Eilgangkolben (11) eine Einheit bilden.

4. Vorrichtung nach Anspruch 1, dadurch gekennzeichnet, daß der Druckübersetzerkolben (13) ein gesondertes Stellglied zu seiner Verschiebung in eine die Umlauföffnung (17) verschließende Stellung aufweist.

5. Vorrichtung nach Anspruch 4, dadurch gekennzeichnet, daß das Stellglied aus einem axial verschieblichen, in einem, an den öffnungsseitigen Teilraum (14) angrenzenden Zylinderraum mit Anschluß an die Druckleitung (24) gelagerten Stellkolben (30) besteht, der ein in den öffnungsseitigen Teilraum (14) ragendes, den Druckübersetzerkolben (13) beaufschlagendes Verlängerungteil (32) besitzt.

6. Vorrichtung nach Anspruch 1, dadurch gekennzeichnet, daß die zum öffnungsseitigen Hauptzylinderraum (7) führende Anschlußleitung (23) ein Zeitverzögerungsglied aufweist.

7. Vorrichtung nach Anspruch 6, dadurch gekennzeichnet, daß das Zeitverzögerungsglied aus einem entgegen der Förderrichtung des Druckmediums wirkenden federbelasteten Ventil (27, 28) besteht.

8. Vorrichtung nach Anspruch 6, dadurch gekennzeichnet, daß das Zeitverzögerungsglied aus einer in der Anschlußleitung (23) angeordneten Drossel besteht.

**Claims**

1. A mold closing device for an injection molding machine having a hydraulically moved mold support plate (1), whose hydraulic driving system has a double acting main piston (6), a main cylinder space separated by the main piston into an opening main cylinder space (7) and a closing main cylinder space (8), and a high speed system drivingly joined with the main piston, and in which the opening and closing main cylinder spaces are joined together by a joining duct which is placed in the main piston and may be shut off, characterized in that the main piston (6) has a cylinder space which is more specially coaxial, having within it axially moving pressure changing piston (13) separating said cylinder space into an opening space part (14) and closing space part (15), in that the duct is so designed that the closing space part (15) has a connection opening (16) into the opening main cylinder space (7) and a bypass opening (17) which may be shut down by axial motion of the pressure changing piston (13), into the closing main cylinder space (8), in that the pressure changing piston (13), for the purpose of producing a stepped-up pressure has two oppositely spacing piston faces of different size, of which the greater piston face (19) is on the opening space (14) side and the smaller piston face (20) is on the closing space part (15) side, and the smaller piston face (20) is produced after shutting down the bypass opening (17) by the shut-off piston (21) running out from the smaller piston face (20) and fixedly joined with the pressure changing piston, and in that the opening space part (14) and the opening main piston space (7) are joined up by way of connection lines (22) and in the other case (23) with a common pressure line (24).

2. A device as claimed in claim 1, characterized in that the high speed system is made up of a hydraulic high speed piston (11) placed in a high speed cylinder space (12) and is placed on the same axis as the double acting main piston (6).

3. A device as claimed in claim 2, characterized in that the double acting main piston (6) and the high speed piston (11) are united.

4. A device as claimed in claim 1, characterized in that the pressure changing piston (13) has a separate adjustment part for causing motion thereof into a position shutting off the bypass opening (17).

5. A device as claimed in claim 4, characterized in that the adjustment part is made up of an axially moving adjustment piston (30) placed in a cylinder space (with a connection to the pressure line (24)) next to the opening space part (14) and the adjustment piston (30) has a tailpiece (32) running out into the opening space part (14) and acting on the pressure changing piston (13).

6. A device as claimed in claim 1, characterized in that the connection duct (23) joined up with the opening main cylinder space (7) has a timer.

7. A device as claimed in claim 6, characterized in that the timer is made up of a spring loaded valve (27, 28) acting against the direction of the driving fluid under pressure.

8. A device as claimed in claim 6, characterized in that the timer is made up of a choke placed in the connection duct (23).

**Revendications**

1. Dispositif de fermeture de moule pour une machine à mouler par injection, comportant une plaque (1) de support de moule déplaçable hydrauliquement, dont le dispositif hydraulique d'entraînement comprend un piston principal (6) à double effet, une chambre cylindrique principale subdivisée par le piston principal en une chambre cylindrique principale située côté ouverture et en une chambre cylindrique principale située côté fermeture (7 ou 8), ainsi qu'un dispositif de déplacement rapide en liaison efficace avec le piston principal, et dans lequel la chambre cylindrique principale située côté ouverture et la chambre cylindrique principale située côté fermeture sont reliées l'une à l'autre par un passage traversant obturable ménagé dans le piston principal, dispositif caractérisé par le fait que le piston principal (6) présente une chambre cylindrique de préférence coaxiale, dans laquelle est mobile axialement un piston (13) multiplicateur de pression, qui subdivise ladite chambre cylindrique en une chambre partielle (14) située côté ouverture et en une chambre partielle (15) située côté fermeture; par le fait que le passage traversant est réalisé de telle manière que la chambre partielle (15) située côté fermeture possède un orifice de communication (16) avec la chambre cylindrique principale (7) située côté ouverture et un orifice de circulation (17), qui peut être obturé par suite d'un déplacement axial du piston (13) multiplicateur de pression et qui débouche dans la chambre cylindrique principale (8) située côté fermeture; par le fait que, pour engendrer une pression accrue, le piston (13) multiplicateur de pression présente deux faces de grandeur différente orientées dans des directions opposées, la face (19) la plus grande étant tournée vers la chambre partielle (14) située côté ouverture et la face (20) la plus petite étant tournée vers la chambre partielle (15) située côté fermeture, ladite face (20) la plus petite ne se présentant qu'après l'obturation de l'orifice de circulation (17) par un piston obturateur (21) saillant au-delà de ladite face (20) la plus petite et assujetti au piston multiplicateur de pression; et par le fait que la chambre partielle (14) située côté ouverture et la chambre cylindrique principale (7) située côté ouverture sont reliées, par l'intermédiaire de conduits de raccordement (22 ou 23), à un conduit commun de pression (24).

2. Dispositif selon la revendication 1, caractérisé par le fait que le dispositif de déplacement rapide consiste en un piston (11) à mouvement rapide actionnable hydrauliquement et logé dans une chambre cylindrique (12) de mouvement rapide, et se trouve sur le même axe que le piston principal (6) à double effet.

3. Dispositif selon la revendication 2, caractérisé par le fait que le piston principal (6) à double effet et le piston (11) à mouvement rapide forment un seul bloc.

4. Dispositif selon la revendication 1, caractérisé par le fait que le piston (13) multiplicateur de pression présente un organe individuel de manoeuvre en vue de son déplacement à une position d'obturation de l'orifice de circulation (17).

5. Dispositif selon la revendication 4, caractérisé par le fait que l'organe de manoeuvre consiste en un piston de commande (30) qui, mobile axialement dans une chambre cylindrique contiguë à la chambre partielle (14) située côté ouverture et raccordé au conduit de pression (24), possède une queue (32) qui fait saillie dans la chambre partielle (14) située côté ouverture et qui sollicite le piston (13) multiplicateur de pression.

6. Dispositif selon la revendication 1, caractérisé par le fait que le conduit de raccordement (23), débouchant dans la chambre cylindrique principale (7) située côté ouverture, présente un organe de temporisation.

7. Dispositif selon la revendication 6, caractérisé par le fait que l'organe de temporisation consiste en un clapet (27, 28) chargé élastiquement et agissant à l'encontre de la direction de l'écoulement du fluide sous pression.

8. Dispositif selon la revendication 6, caractérisé par le fait que l'organe de temporisation consiste en un étranglement disposé dans le conduit de raccordement (23).

Fig. 1

0011 838

Fig. 2

Fig. 3

0011838